# EUROPEAN PATENT SPECIFICATION

(11) **EP 2 855 277 B1**
(45) Date of publication and mention of the grant of the patent: **12.04.2017**
(21) Application number: 13797430.9
(22) Date of filing: 24.05.2013
(51) Int. Cl.: B64G 1/24, B64G 1/10, B64G 1/26

(54) **A METHOD FOR GEOSTATIONARY STATION KEEPING OF A SPACECRAFT, AND A SYSTEM THEREFOR**
VERFAHREN ZUR GEOSTATIONÄREN POSITIONSEINHALTUNG EINES RAUMFAHRZEUGES UND SYSTEM DAFÜR
PROCÉDÉ POUR CONSERVER UNE STATION GÉOSTATIONNAIRE D'UN ASTRONEF ET SON SYSTÈME

(30) Priority: 28.05.2012 SE 1250545
(43) Date of publication of application: 08.04.2015
(73) Proprietor: Ohb Sweden AB, 164 40 Kista (SE)
(72) Inventor: BATTELINO, Milan, S-172 35 Sundbyberg (SE); EDFORS VANNEVIK, Anders Gunnar, S-120 67 Stockholm (SE)
(74) Representative: Brann AB
(86) International application number: PCT/SE2013/050595
(87) International publication number: WO 2013/180628

(56) References cited:
- WO-A1-95/22489
- WO-A1-95/22489
- WO-A1-99/38276
- WO-A1-99/38276
- US-A- 5 855 341
- US-A- 5 855 341
- US-A- 6 042 058

## Description

### TECHNICAL FIELD

The present invention generally relates to the field of orbit control for a spacecraft and more specifically to a method for station keeping of a geostationary spacecraft and a system therefor.

### BACKGROUND

By placing a spacecraft in a geostationary orbit around the earth the spacecraft becomes almost fixed relative to the earth. The ideal geostationary position is in the equatorial plane with a distance from the earth's surface of 35786.4 km. Thus, the geostationary orbit constitutes a very limited region of space. The geostationary orbit is divided into a number of slots with a radial extension, a latitude extension and a longitude extension. Each slot is assigned to different operators by the World Administrative Radio Conferences, WARC, which are organised by the International Telecommunication Union, ITU. The slot is well defined and the operator must take utmost care to ensure that the spacecraft is kept within the boundaries of the slot. This control of the spacecrafts position is in the art called station-keeping.

The station-keeping control loop must counteract several external forces acting on the spacecraft. These forces can for example be gravitational forces from other celestial bodies such as the moon and the sun. Other forces such as the radiation pressure from the sun must of course also be considered.

Due to the increased demand from the operators to place more and more spacecrafts into the geostationary orbit some operators wish to co-locate several spacecrafts within the same slot. Such co-location strategies usually belongs to one or combinations of the following groups:
No collision avoiding measures, ignore the risk of collision.
Uncoordinated co-location with collision checking, keep a minimum safe distance between the co-located spacecrafts.
Co-location by separation, each spacecraft has its own dedicated region within the slot permanently allocated.
Coordinated station keeping, declare one of the spacecrafts as a master which performs its station keeping independently and relative to which the other co-located spacecrafts shall manoeuvre.

A common example of a co-location strategy belonging to the separation group is the sun-perigee pointing strategy. In short this strategy aims to use the natural perturbations from the sun as a separation means for the longitude. First the spacecrafts are inserted into orbits with the perigees offset from each other. The sun-perigee pointing strategy uses the natural perturbance on the spacecraft from the sun, causing the perigee thereof to follow the sun. In order to separate the latitude of the spacecrafts the inclination angle are adjusted for each of the co-located spacecrafts.

However, the sun-perigee pointing strategy imposes a limit on the maximum number of co-located satellites in a slot if a minimum distance between the spacecraft is to be maintained. Therefore, it exists a large demand for a station-keeping method that can increase this maximum number of co-located spacecraft.

An example of such a method is disclosed in US5855341. In this patent a method for co-locating several satellites in which east-west velocity increment during the execution of north-south orbit control is not neglible is disclosed. However, this method is difficult to use for co-location purposes together with spacecrafts utilizing the sun-perigee pointing strategy.

### SUMMARY

In view of the foregoing one object of the present invention is to provide a method for geostationary station keeping of a spacecraft and a system therefor. In particular one object of the invention is to provide a method for geostationary station keeping of a spacecraft which allows co-location with at least one more spacecraft utilizing the sun-perigee pointing strategy.

The objects of the invention are achieved by the method and the system defined in the independent claims.

A method for station keeping of a spacecraft in a defined slot of a geostationary orbit in accordance with the invention, wherein the spacecraft comprises at least two propulsion units having forces with components in an east-, a west-, a south- and a north-direction in a coordinate system fixed to the spacecraft. The method comprises the steps of placing the spacecraft in said defined slot of the geostationary orbit. Followed by the steps of controlling a direction of a apogee vector. The apogee vector originating at the center of the earth and pointing towards an apogee of the geostationary orbit of the spacecraft. The apogee vector is controlled to point in a direction with an angle in the interval from -90 to 90 degrees from a direction of a sun vector. The sun vector originating at the center of the earth and pointing towards the sun. The method simultaneously controls the eccentricity and inclination of the geostationary orbit to be within the defined slot.

One advantage with the method according to the invention is that minor extra propellant is used for the purpose of station-keeping, only the forces arising from the north-south station keeping are utilized for east-west station keeping.

Another advantage of the method according to the invention is that the method allows co-location with at least one additional spacecraft.

Yet another advantage of the method according to the invention is that the method allows co-location with at least one additional spacecraft utilizing a sun-perigee pointing strategy. Thus, enabling more satellites to be co-located within the slot.

Yet further advantages and features of embodiments of the present invention will become apparent when reading the following detailed description in conjunction with the drawings.

### BRIEF DESCRIPTION OF THE DRAWINGS

Preferred embodiments of the invention will now be described with reference to the accompanying drawings, wherein
Figure 1 is a schematic figure of a prior-art method for station-keeping,
Figure 2 is a schematic figure of a sun-perigee pointing strategy for co-location of spacecrafts,
Figure 3 is a schematic figure illustrating a spacecraft in geostationary orbit utilizing the inventive method,
Figure 4 is a flow diagram illustrating the inventive method for station-keeping,
Figure 5 is a schematic figure of a sun-perigee pointing strategy for co-location of spacecrafts co-located with a spacecraft according to the invention, and
Figure 6 is a schematic figure of a system for geostationary spacecraft station-keeping.

### DETAILED DESCRIPTION

The present invention will now be described more fully hereinafter with reference to the accompanying drawings, in which different exemplary embodiments are shown. These exemplary embodiments are provided so that this disclosure will be thorough and complete and not for the purpose of limitation.

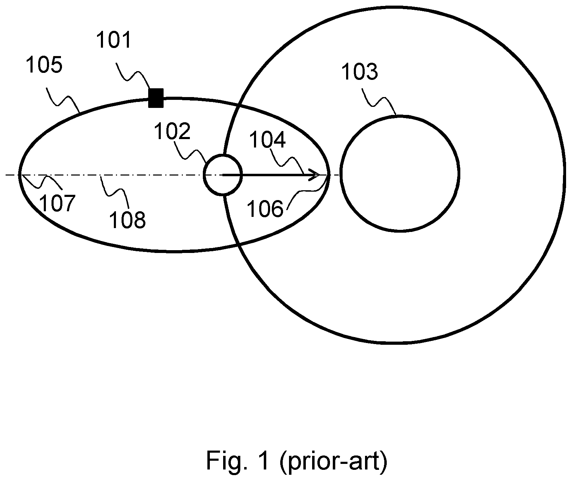

Figure 1 is a schematic figure illustrating a common strategy for station keeping of a spacecraft 101 in a geostationary elliptic orbit 105 around the earth 102. The perigee 106 is the point on the elliptic orbit 105 along the major axis 108 of the elliptic orbit 105 that is closest to the earth 102. The apogee 107 is the point on the elliptic orbit 105 along the major axis 108 of the geostationary elliptic orbit 105 that is farthest from the earth 102. An eccentricity vector 104 is a vector with the origin at the center of the earth 102 having a magnitude equal to the eccentricity of the elliptic orbit 105 and is directed along the major axis 108 of the elliptic orbit 105 in the direction of perigee 106.

In this strategy the eccentricity vector 104 is directed towards the sun 103 by means of adjusting the orbit 105. Thus, in this strategy the eccentricity vector 104 will always point directly or with an offset towards the sun 103. This strategy is usually called the sun-perigee pointing strategy.

The major benefit of the sun-perigee pointing strategy for co-location of at least two spacecrafts is that one can select the orbital parameters for each of the at least two spacecrafts in such a way that spacecrafts with similar mass, surface area and reflective constant will be perturbed in the same way. Thus, controlling a relative eccentricity vector between the at least two spacecrafts to be essentially constant, and together with an inclination separation guarantee a defined minimum inter-spacecraft distance. Hence, the sun and the radiation pressure therefrom will affect the at least two spacecrafts in a similar way.

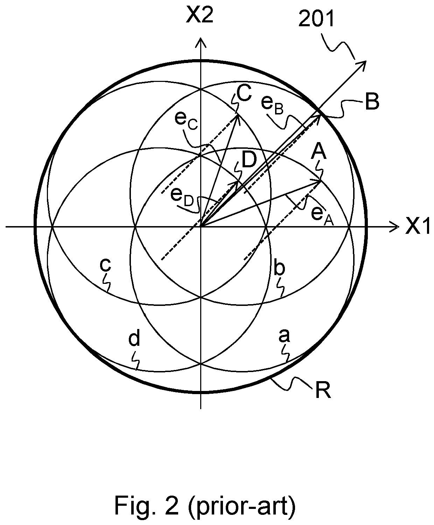

Figure 2 illustrates a conventional co-location of four spacecrafts using the sun-perigee pointing strategy. A Cartesian coordinate system is defined with the earth at the center and a pair of mutually orthogonal axes X1 and X2. In the illustrated example four geostationary spacecrafts A, B, C and D are positioned within the same slot. Eccentricity vectors of the geostationary spacecrafts A, B, C and D are indicated respectively at e_{A}, e_{B}, e_{C} and e_{D}. Since the four spacecrafts have respective different eccentricities and inclinations, they move along paths separated from each other. The spacecrafts are separated by their eccentricity, hence the method is called eccentricity separation. The eccentricity vectors are greatly influenced by the radiation pressure from the sun, and the points thereof describe circles a, b, c and d with or without the help of east-west station keeping maneouvres, respectively in a year. East-west station keeping maneouvres are used to counteract natural longitudinal drift within the slot as well as in a case where the natural eccentricity circle (resulting from sun perturbations) of the spacecraft does not correspond to the desired eccentricity circle used in the co-location strategy. Although the circles a, b, c and d intersect one another at several points, the points of the eccentricity vectors rotate synchronously during circling: therefore combined with an inclination separation strategy the distances between the points of the vectors are always ensured and the spacecrafts do not collide with one another. Thus the sun-perigee pointing strategy utilizes the sun-synchronous rotation of the eccentricity. An outer circle R represents an allowable range of the eccentricity for maintaining the station-keeping within the assigned slot. A sun vector 201 that points towards the sun is illustrated together with the four spacecrafts A, B, C and D in the Cartesian coordinate system.

For a more thorough description of the sun-perigee pointing strategy can reference be made to the excellent book "Handbook of geostationary orbits" by E.M. Soop. A problem with the sun-perigee pointing strategy is that the space within the geostationary slot, described hereinabove, is not fully exploited for the purpose of co-location. This is due to the fact that the co-located spacecrafts moves in coordinated sun-synchronous circles a, b, c and d, within the slot with a periodicity of one year. The radius of the coordinated circles is given by the mass, surface area and the reflective coefficient of the spacecrafts. This means that the slot is only partially used at each instance of time.

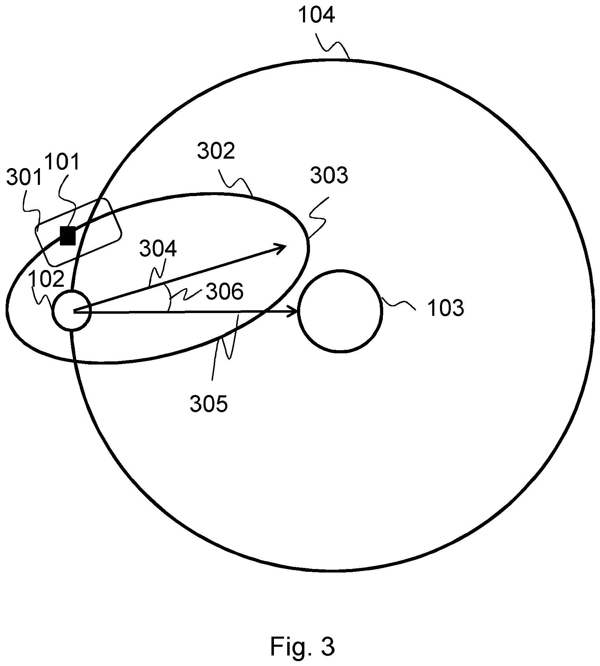

Figure 3 discloses a method for station keeping of the spacecraft 101 in a defined slot 301 of a geostationary orbit 302 around the earth 102. A apogee vector 304 originates at the center of the earth 102 pointing towards the apogee 303 of the orbit 302. The sun vector 305 originates at the center of the earth 102 and points towards the sun 103. The apogee vector 304 and the sun vector 305 having an angle 306 therebetween. The method involves adjusting the orbital parameters of the orbit 302 in such a way that the angle 306 is in an interval from -90 to 90 degrees .This adjustment of the orbital parameters can be performed by having at least two propulsion units having forces with components in an east-, a west-, a south- and a north-direction in a coordinate system fixed to the spacecraft. Since propulsion units are used for inclination control i.e. north and south directed propulsion units, it is not uncommon that an activation of these propulsion units exhibits forces in east and west directions. Hence, these forces can be used for adjusting the orbital parameters of the orbit 302 to implement the inventive method described hereinabove with a minor cost of extra propellant. However, the propulsion units is in a preferred embodiment configured for long activation times with low thrust levels. In order to counteract the sun radiation pressure acting on the spacecraft.

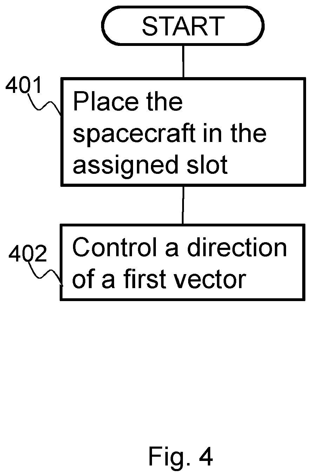

Figure 4 shows a flow diagram illustrating the inventive method disclosed hereinabove. The first step 401 of the inventive method is to place the spacecraft in the assigned slot of the geostationary orbit, this step can be performed using standard procedures known in the art. The second step 402 involves controlling a direction of the apogee vector originating at the center of the earth and pointing towards the apogee of the geostationary orbit of the spacecraft to point in a direction with the angle 306 in the interval from -90 to 90 degrees from the direction of the sun vector. The sun vector originating at the center of the earth and points towards the sun. The method also involves simultaneous control of the eccentricity of the geostationary orbit to be within the defined interval given by the size of the assigned slot.

In one embodiment of the inventive method is the angle 306 between the apogee vector and the sun vector zero degrees. Hence, the apogee vector and the sun vector are parallell.

In another embodiment of the inventive method is the angle 306 in the interval from - 90 to 90 degrees.

In yet another embodiment is at least two spacecrafts co-located using the inventive method but with different angles 306.

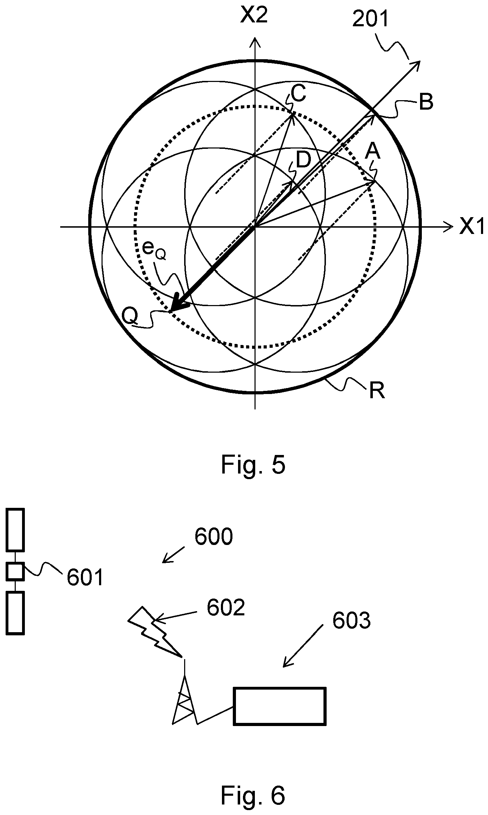

Figure 5 shows the inventive method for station keeping of a spacecraft Q in a defined slot of a geostationary orbit together with four spacecrafts A, B, C and D, wherein A, B, C and D are co-located using the hereinbefore described sun-perigee pointing strategy. The inventive method causes a eccentricity vector e_{Q} for the spacecraft Q to point in a direction away from the sun. It is obvious from this figure that the separation in eccentricity from the spacecraft Q to the group of spacecrafts consisting of A, B, C and D is constant if the rotational speed of the eccentricity vector e_{Q} follows the sun-synchronous rotation of the other eccentricity vectors e_{A}, e_{B}, e_{C} and e_{D}. Hence, the inventive method can together with an inclination separation be used to co-locate at least one additional spacecraft to a group of spacecrafts using the conventional sun-perigee pointing strategy with minor or no cost of extra propellant.

In an embodiment of the invention follows the rotational speed of the eccentricity vector e_{Q} the sun-synchronous rotational speed in order to keep the interdistance between the spacecrafts under control.

An advantage of some embodiments of the invention is that no change of the existing co-location strategy is necessary in order to co-locate an additional spacecraft using the inventive method.

An another advantage of some embodiments of the invention is that an increased distance between the conventionally co-located spacecrafts and the spacecraft using the inventive method is obtained.

Yet another advantage of some embodiments of the invention is that a minor or no increase of propellant consumption results from the inventive method.

In figure 6 is a system 600 for geostationary spacecraft station-keeping illustrated. The system 600 comprises:
A spacecraft 601 comprising at least two propulsion units having forces with components in an east-, a west-, a south- and a north-direction in a coordinate system fixed to the spacecraft. The spacecraft 601 further comprises a control unit for controlling said at least two propulsion units. The control unit is configured for receiving remote control signals 602.
A remote control station 603 for remote control of a geostationary orbit of the spacecraft 601 by means of said remote control signals 602. The remote control station 603 being configured to place the spacecraft 601 in a defined slot of the geostationary orbit. The remote control station 603 is further configured to control a direction of the apogee vector originating at the center of the earth and pointing towards the apogee of the geostationary orbit of the spacecraft to point in a direction with an angle in the interval from -90 to 90 degrees from a direction of the sun vector originating at the center of the earth and pointing towards the sun. The remote control station 603 is configured for simultaneously control of the eccentricity and inclination of the geostationary orbit to be within the defined slot.

In some embodiments the remote control station 603 receives data about the position and the speed of the spacecraft. This data is used to calculate the necessary changes of the magnitude and direction of the speed of the spacecraft in order to propagate the position thereof to the desired position at a future time.

In some embodiment of the hereinabove described system is the system responsible for station-keeping of at least one additional spacecraft.

In some embodiment of the hereinabove described system is the system responsible for station-keeping and co-location of at least one additional spacecraft using the sun-perigee pointing strategy.

## Claims

1. A method for station keeping of a spacecraft (101) in a defined slot of a geostationary orbit (302), wherein the spacecraft comprises:
at least two propulsion units having forces with components in an east-, a west-, a south- and a north-direction in a coordinate system fixed to the spacecraft, wherein the method comprises the steps of:
placing the spacecraft in said defined slot of the geostationary orbit,
controlling a direction of an apogee vector (304) originating at the center of the earth (102) and pointing towards an apogee (303) of the geostationary orbit of the spacecraft to point in a direction with an angle in the interval from -90 to 90 degrees from a direction of a sun vector (305) originating at the center of the earth and pointing towards the sun (103), and simultaneously controlling the eccentricity and inclination of the geostationary orbit to be within the defined slot.

2. A method according to claim 1, wherein an apogee vector of the orbit of said spacecraft is rotating with one revolution per year.

3. A method according to claim 1 or 2, wherein the the apogee vector and the sun vector are parallell.

4. A method for station-keeping of a first spacecraft for co-location with at least one second spacecraft being controlled according to a sun-perigee pointing strategy in a defined geostationary slot wherein:
the first spacecraft is controlled by the method according to any preceding claim.

5. A system (600) for geostationary spacecraft station-keeping comprising:
a spacecraft (601) comprising at least two propulsion units having forces with components in an east-, a west-, a south- and a north-direction in a coordinate system fixed to the spacecraft, the spacecraft further comprises a control unit for controlling said at least two propulsion units, the control unit is configured for receiving remote control signals (602),
a remote control station (603) for remote control of a geostationary orbit (302) of the spacecraft by means of said remote control signals, the remote control station being configured to place the spacecraft in a defined slot of the geostationary orbit, and controlling a direction of a apogee vector (304) originating at the center of the earth (102) and pointing towards an apogee (303) of the geostationary orbit of the spacecraft to point in a direction with an angle in the interval from -90 to 90 degrees from a direction of a sun vector (305) originating at the center of the earth and pointing towards the sun (103), and simultaneously controlling the eccentricity and inclination of the geostationary orbit to be within the defined slot.

## Patentansprüche

1. Verfahren zur Positionseinhaltung eines Raumfahrzeugs (101) in einem definierten Slot einer geostationären Umlaufbahn (302), wobei das Raumfahrzeug umfasst:
mindestens zwei Triebwerke mit Kräften mit Komponenten in einer Ost-, einer West-, einer Süd- und einer Nord-Richtung in einem an dem Raumfahrzeug fixierten Koordinatensystem, wobei das Verfahren die Schritte umfasst des:
Platzierens des Raumfahrzeugs in dem definierten Slot der geostationären Umlaufbahn,
Steuerns einer Richtung eines Apogäumsvektors (304), der vom Mittelpunkt der Erde (102) ausgeht und zu einem Apogäum (303) der geostationären Umlaufbahn des Raumfahrzeugs weist, sodass er in eine Richtung mit einem Winkel im Bereich von -90 bis 90 Grad von einer Richtung eines Sonnenvektors (305) weist, der vom Mittelpunkt der Erde ausgeht und zur Sonne (103) weist, und gleichzeitig Steuerns der Exzentrizität und Neigung der geostationären Umlaufbahn, sodass diese sich in dem definierten Slot befindet.

2. Verfahren nach Anspruch 1, wobei ein Apogäumsvektor der Umlaufbahn des Raumfahrzeugs mit einer Umdrehung pro Jahr rotiert.

3. Verfahren nach Anspruch 1 oder 2, wobei der Apogäumsvektor und der Sonnenvektor parallel sind.

4. Verfahren zur Positionseinhaltung eines ersten Raumfahrzeugs zur Co-Positionierung mit mindestens einem zweiten Raumfahrzeug, das gemäß einer Sonnen-Perigäum-Weisungsstrategie in einem definierten geostationären Slot gesteuert wird, wobei:
das erste Raumfahrzeug mittels des Verfahrens nach gleich welchem vorhergehenden Anspruch gesteuert wird.

5. System (600) zur Positionseinhaltung geostationärer Raumfahrzeuge, umfassend:
ein Raumfahrzeug (601), umfassend mindestens zwei Triebwerke mit Kräften mit Komponenten in einer Ost-, einer West-, einer Süd- und einer Nord-Richtung in einem an dem Raumfahrzeug fixierten Koordinatensystem, wobei das Raumfahrzeug weiter eine Steuereinheit zur Steuerung der mindestens zwei Triebwerke umfasst, wobei die Steuereinheit zum Empfangen von Fernsteuerungssignalen (602) eingerichtet ist,
eine Fernsteuerungsstation (603) zur Fernsteuerung einer geostationären Umlaufbahn (302) des Raumfahrzeugs mittels der besagten Fernsteuerungssignale, wobei die Fernsteuerungsstation dazu eingerichtet ist, das Raumfahrzeug in einem definierten Slot der geostationären Umlaufbahn zu platzieren und eine Richtung eines Apogäumsvektors (304) zu steuern, der vom Mittelpunkt der Erde (102) ausgeht und zu einem Apogäum (303) der geostationären Umlaufbahn des Raumfahrzeugs weist, sodass er in eine Richtung mit einem Winkel im Bereich von -90 bis 90 Grad von einer Richtung eines Sonnenvektors (305) weist, der vom Mittelpunkt der Erde ausgeht und zur Sonne (103) weist, und
gleichzeitig Steuern der Exzentrizität und Neigung der geostationären Umlaufbahn, sodass diese sich in dem definierten Slot befindet.

## Revendications

1. Procédé pour conserver une station d'un astronef (101) dans un créneau défini d'une orbite géostationnaire (302), dans lequel l'astronef comprend :
au moins deux unités de propulsion possédant des forces ayant des composantes dans une direction est, ouest, sud et nord dans un système de coordonnées fixe par rapport à l'astronef, dans lequel le procédé comprend les étapes de :
placement de l'astronef dans ledit créneau défini de l'orbite géostationnaire,
commande d'une direction d'un vecteur d'apogée (304) ayant pour origine le centre de la terre (102) et pointant vers un apogée (303) de l'orbite géostationnaire de l'astronef pour pointer dans une direction ayant un angle dans l'intervalle de -90 à 90 degrés par rapport à une direction d'un vecteur solaire (305) ayant pour origine le centre de la terre et pointant vers le soleil (103), et la commande simultanée de l'excentricité et de l'inclinaison de l'orbite géostationnaire pour se trouver dans le créneau défini.

2. Procédé selon la revendication 1, dans lequel un vecteur d'apogée de l'orbite dudit astronef tourne à la vitesse d'un tour par an.

3. Procédé selon les revendications 1 ou 2, dans lequel le vecteur d'apogée et le vecteur solaire sont parallèles.

4. Procédé pour conserver une station d'un premier astronef pour colocalisation avec au moins un second astronef commandé selon une stratégie de pointage vers un périgée solaire dans un créneau géostationnaire défini dans lequel :
le premier astronef est commandé par le procédé selon l'une quelconque des revendications précédentes.

5. Système (600) de conservation d'une station géostationnaire d'un astronef comprenant :
un astronef (601) comprenant au moins deux unités de propulsion possédant des forces ayant des composantes dans une direction est, ouest, sud et nord dans un système de coordonnées fixe par rapport à l'astronef, l'astronef comprend en outre une unité de commande pour commander lesdites au moins deux unités de propulsion, l'unité de commande est configurée pour la réception de signaux de commande à distance (602),
une station de commande à distance (603) pour la commande à distance d'une orbite géostationnaire (302) de l'astronef au moyen desdits signaux de commande à distance, la station de commande à distance étant configurée pour placer l'astronef dans un créneau défini de l'orbite géostationnaire, et commandant une direction d'un vecteur d'apogée (304) ayant pour origine le centre de la terre (102) et pointant vers un apogée (303) de l'orbite géostationnaire de l'astronef pour pointer dans une direction ayant un angle dans l'intervalle de -90 à 90 degrés par rapport à une direction d'un vecteur solaire (305) ayant pour origine le centre de la terre et pointant vers le soleil (103), et commandant simultanément l'excentricité et l'inclinaison de l'orbite géostationnaire pour se trouver dans le créneau défini.
